(19) Europäisches Patentamt

European Patent Office

Office européen des brevets

(11) **EP 1 674 558 A1**

(12) **EUROPEAN PATENT APPLICATION**
published in accordance with Art. 158(3) EPC

(43) Date of publication:
28.06.2006 Bulletin 2006/26

(51) Int Cl.:
*C10M 173/02* (1985.01)    *B24B 57/02* (1985.01)
*B28D 5/00* (1968.09)    *H01L 21/304* (1974.07)
*C10M 173/02* (1985.01)    *C10N 30/06* (1985.01)
*C10N 40/22* (1985.01)

(21) Application number: 04792274.5

(22) Date of filing: 12.10.2004

(86) International application number:
PCT/JP2004/015030

(87) International publication number:
WO 2005/037968 (28.04.2005 Gazette 2005/17)

(84) Designated Contracting States:
DE FR

(30) Priority: 16.10.2003 JP 2003356750

(71) Applicant: MITSUBISHI DENKI K.K.
Tokyo (JP)

(72) Inventors:
• TSURUTA, Hirozoh
c/o Mitsubishi Denki K.K.
Tokyo 100-8310 (JP)
• HAMAYASU, Masayuki;
c/o Mitsubishi Denki K.K.
Tokyo 100-8310 (JP)

• KAWASAKI, Takafumi;
c/o Mitsubishi Denki K.K.
Tokyo 100-8310 (JP)
• NISHIDA, Hirokazu;
c/o Mitsubishi Denki K.K.
Tokyo 100-8310 (JP)
• TOMINAGA, Hisashi;
c/o Mitsubishi Denki K.K.
Tokyo 100-8310 (JP)

(74) Representative: Sajda, Wolf E. et al
MEISSNER, BOLTE & PARTNER
Postfach 86 06 24
81633 München (DE)

(54) **SLURRY FOR SLICING SILICON INGOT AND METHOD FOR SLICING SILICON INGOT USING SAME**

(57)    In a slurry for cutting a silicon ingot according to the present invention, a content of a basic material is at least 3.5% by mass with respect to the total mass of a liquid component of a slurry, organic amine is contained in a mass ratio of 0.5 to 5.0 with respect to water in a liquid component of the slurry, and pH of the slurry is 12 or more. Furthermore, according to a method of cutting a silicon ingot according to the present invention, the above-mentioned slurry for cutting a silicon ingot is used at 65°C to 95°C. Consequently, the cutting resistance during cutting processing of a silicon ingot is reduced, and a wafer of high quality can be obtained efficiently.

EP 1 674 558 A1

## Description

<u>Technical Field</u>

The present invention relates to a slurry for cutting a silicon ingot used for cutting a single crystalline, polycrystalline, or amorphous silicon ingot to produce a wafer for a semiconductor or solar battery, and to a method of cutting a silicon ingot using the slurry.

<u>Background Art</u>

Conventionally, cutting of a silicon ingot involves use of a wire saw, which is capable of cutting with a small cutting allowance and a uniform thickness, and capable of cutting a number of wafers atatime. Such cutting of a silicon ingot using a wire saw is performed by introducing a cutting slurry containing abrasive grains into a cutting interface while pressing a silicon ingot against a traveling wire. In such cutting of a silicon ingot using a wire, there is a demand for maintaining high wafer quality, enhancing a cutting speed, decreasing a cutting allowance or a cutting pitch, and reducing a wafer processing cost.

In order to maintain high wafer quality, it is necessary to enhance the dispersibility of abrasive grains in a cutting slurry and maintain cutting performance constant at all times. For this purpose, a thickener such as xanthan gum or polyvinyl alcohol is added to a cutting slurry to increase viscosity, and to suppress the precipitation of abrasive grains. However, when cutting processing is performed using such a cutting slurry for a long period of time, the viscosity of the slurry increases during the processing to increase the pulling resistance of a wire from a cut groove, which makes it necessary to decrease the feeding speed of the wire. Accordingly, it is necessary to decrease the feeding speed (i.e., cutting speed) of a silicon ingot, which decreases a cutting efficiency. Furthermore, the pulling resistance of the wire becomes excessive, which breaks the wire.

Meanwhile, in order to decrease a cutting allowance, the diameter of the wire may be decreased. However, the breakage strength of the wire decreases accordingly, which makes it necessary to decrease the tension applied to the wire. A silicon ingot is cut by a lapping function, that is, pressure transfer. Therefore, when the tension of the wire is decreased, the cutting speed becomes low, and the displacement (deformation) of the wire becomes large. When the displacement (deformation) of the wire becomes large, the displacement of the wire in a direction perpendicular to the cutting direction also becomes large. Consequently, warping of a wafer, irregular thickness, and minute unevenness (saw mark) occur, resulting in a decrease in quality of a wafer. When the feeding speed of a silicon ingot is decreased in accordance with the delay of the cutting speed in order to decrease the deformation of the wire, the cutting efficiency decreases. When the feeding speed of the wire is increased to compensate for the delay of the cutting speed, thereby increasing the feeding speed of a silicon ingot, a margin with respect to dispersion failure of abrasive grains is lost at the cutting interface, with the result that the wire breaks due to the abrupt increase in tension.

Thus, in order to maintain high wafer quality, to enhance the cutting speed, and to decrease the cutting allowance or cutting pitch of a silicon ingot, it is necessary to reduce a cutting resistance.

A method of cutting a silicon ingot using a fixed abrasive grain wire, and a slurry containing free abrasive grains or a KOH alkaline solution with a concentration of 2% or less has been proposed (for example, see Patent Document 1).

Patent Document 1: JP-A 2000-343525

<u>Disclosure of the Invention</u>

<u>Problems to be solved by the Invention</u>

According to a conventional cutting method using a fixed abrasive grain wire and a slurry containing free abrasive grains, a fixed wire is used as a medium for transporting free abrasive grains, reducing the uncertainty of an introduction amount of free abrasive grains into a cutting interface to increase an average introduction amount of free abrasive grains. Further, fixed abrasive grains are allowed to act simultaneously, whereby a silicon ingot is cut by lapping. An increase in the so-called number of blades in cutting is expected, and the cutting efficiency is increased, thereby decreasing the apparent cutting resistance. However, compared with the case of using a bare wire, it is difficult to discharge cuttings and free abrasive grains, and the concentration of the cuttings or the free abrasive grains in a liquid at the cutting interface increases, resulting in an increase in slurry viscosity at the cutting interface. Furthermore, the fixed abrasive grain wire is very expensive, so that it is not economical to use such a wire.

According to a conventional cutting method using a fixed abrasive grain wire and an alkaline solution, cuttings clog at the cutting interface, and a part of the alkaline solution is used for dissolving the cuttings, so that the function of the alkaline solution with respect to the cutting surface decreases. Furthermore, aggregated cuttings may give minute cracks to the cutting surface, and the alkaline solution selectively functions to extend such cracks, which roughens the cutting surface. The discharge resistance of the cuttings contributes to the increase in the cutting resistance, which consequently causes the warping of a wafer, irregular thickness, and minute unevenness. In order to obtain a sufficient function of the alkaline solution, it is necessary to greatly decrease the feeding speed of the wire and the feeding speed of a silicon ingot, which remarkably decreases the cutting efficiency.

Thus, the present invention solves the above-mentioned problems, and an object of the present invention is to provide: a slurry for cutting a silicon ingot capable of reducing the cutting resistance during cutting processing of a silicon ingot to obtain a wafer of high quality efficiently; and a method of cutting a silicon ingot using the slurry.

Means for solving the Problems

The present invention provides a slurry for cutting a silicon ingot including abrasive grains and a basic material, characterized in that: a content of the basic material is at least 3.5% by mass with respect to a total mass of a liquid component of the slurry; the slurry contains organic amine in a mass ratio of 0.5 to 5.0 with respect to water in the liquid component of the slurry; and pH of the slurry is 12 or more.

Further, the present invention provides a method of cutting a silicon ingot using a slurry for cutting a silicon ingot containing abrasive grains and a basic material, characterized in that: a content of the basic material is at least 3.5% by mass with respect to a total mass of a liquid component of the slurry; the slurry contains organic amine in a mass ratio of 0.5 to 5.0 with respect to water in the liquid component of the slurry; pH of the slurry is 12 or more; and the slurry is used at 65°C to 95°C.

Effects of the Invention

According to the present invention, a content of a basic material is at least 3.5% by mass with respect to the total mass of a liquid component of a slurry, organic amine is contained in a mass ratio of 0. 5 to 5.0 with respect to water in a liquid component of the slurry, and pH of the slurry is 12 or more. Consequently, the cutting resistance during cutting processing of a silicon ingot is reduced, and a wafer of high quality can be obtained efficiently.

Brief Description of the Drawings

[Fig. 1] A view obtained by tracing an outline of a surface layer portion of a cross-section of a wafer cut in one embodiment of the present invention.
[Fig. 2] A schematic view of a multi-wire saw used in one embodiment of the present invention.
[Fig. 3] An enlarged view of a cut portion of a silicon ingot in one embodiment of the present invention.
[Fig. 4] A view showing a relationship of each parameter in cutting of a silicon ingot using a multi-wire saw.
[Fig. 5] A schematic view of a polishing apparatus used in one embodiment of the present invention.
[Fig. 6] A graph showing the viscosity of a slurry for cutting a silicon ingot in Example 1.
[Fig. 7] A graph showing the viscosity of a slurry for cutting a silicon ingot in Comparative Examples 1, 2, and 3.

Best Mode for carrying out the Invention

A slurry for cutting a silicon ingot according to the present invention contains abrasive grains and a basic material. The content of the basic material is at least 3.5% by mass with respect to the total mass of a liquid component of the slurry, the slurry further contains organic amine in a mass ratio of 0.5 to 5.0 with respect to water in the liquid component of the slurry, and pH of the slurry is 12 or more.

In the present invention, as the abrasive grains, those which are generally used as abrasives may be used. Examples of the abrasive grains include silicon carbide, cerium oxide, diamond, boron nitride, aluminum oxide, zirconium oxide, and silicon dioxide, which can be used alone or in combination of two or more kinds thereof. Compounds which can be used as such abrasive grains are commercially available. Specific examples of silicon carbide include GC (trade name, Green Silicon Carbide) and C (trade name, Black Silicon Carbide) (both produced by Fujimi Inc.), and examples of aluminum oxide include FO (trade name, Fujimi Optical Emery), A (trade name, Regular Fused Alumina), WA (trade name, White Fused Alumina), and PWA (trade name, Platelet Calcined Alumina) (all produced by Fujimi Inc.).

The average grain diameter of the abrasive grains is not particularly limited, but it is preferably 1 μm to 60 μm, more preferably 5 μm to 20 μm. The average grain diameter of the abrasive grains of less than 1 μm is not practical because the cutting speed becomes remarkably low. The average grain diameter of the abrasive grains of more than 60·m is not preferable because the surface roughness of the wafer surface becomes large after cutting, which degrades the quality of the wafer.

Furthermore, the content of the abrasive grains is not particularly limited, but it is preferably 20% by mass to 60% by mass with respect to the total mass of the slurry for cutting a silicon ingot. The content of the abrasive grains of less than 20% by mass is not practical because the cutting speed becomes low. When the content of the abrasive grains exceeds 60% by mass, the viscosity of the slurrybecomes too large, whichmaymake it difficult to introduce the slurry into a cutting interface.

In the present invention, a material acting as a base in a slurry may be used as the basic material. An example of the basic material includes metal hydroxide. More specific examples thereof include: alkaline metal hydroxide such as lithium hydroxide, sodium hydroxide, or potassium hydroxide; and alkaline earth hydroxide such as magnesium hydroxide, calcium hydroxide, or barium hydroxide. The basic material can be used alone or in combination of two or morekindsthereof. Ofthose,alkaline metalhydroxideispreferable in terms of the reactivity with a silicon ingot.

The content of the basic material is at least 3.5% by mass, preferably at least 4.0% by mass, preferably 30% by mass or less, and more preferably 20% by mass or less with respect to the total mass of the liquid component of the slurry for cutting a silicon ingot. When the content of the basic material is too small, the cutting resistance is not sufficiently reduced. An excessively large content of the basic material is not preferable because pH of the slurry is saturated, and the cutting resistance is not reduced to such a degree as the added amount, which is a waste of cost.

The slurry for cutting a silicon ingot in the present invention contains organic amine in addition to the basic material. It was found from an experiment that when organic amine is mixed with the basic material, a chemical action increases compared with the case of using only the basic material. Organic amine has a function as a thickener, and is compatible with water. Further, the increase in viscosity of the slurry caused by evaporation of water can be suppressed, compared with the case of using a conventional thickener such as xanthan gum or polyvinyl alcohol. As such organic amine, those which are known can be used without any limit. Examples of organic amine include: alkanolamines such as monoethanolamine, diethanolamine, and triethanolamine; aliphatic amines; alicyclic amines; and aromatic amines. The organic amine can be used alone or in combination of two or more kinds thereof. Of those, alkanol amines are preferable, and triethanol amine is more preferable in terms of the cost and handleability.

The content of organic amine in the slurry is 0.5 to 5.0, preferably 1.0 to 4.0 in a mass ratio with respect to the water in the liquid component of the slurry. The mass ratio of the organic amine of less than 0.5 with respect to the water in the liquid component of the slurry is not preferable because the change in viscosity of the slurry during cutting processing cannot be suppressed sufficiently, and the initial viscosity of the slurry becomes low. Furthermore, since the basicity of organic amine is not as strong as that of the basic material, the mass ratio of organic amine of 5.0 or less with respect to the water of the liquid component in the slurry does not greatly change pH of the slurry due to a kind of buffering function. However, the mass ratio of organic amine exceeding 5.0 with respect to the water of the liquid component of the slurry is not preferable because the chemical action of the slurry becomes low, which decreases the cutting speed.

Furthermore, the chemical action with respect to a silicon chip was investigated, using a solution with a varying ratio of a commercially available coolant (Rikamultinole produced by Rikashokai Co. , Ltd. and Lunacoolant produced by Otomo Kagaku Sangyo KK), triethanolamine, and sodium hydroxide. Solutions Nos. 1 to 8 having compositions shown below in Table 1 were prepared, and 10 silicon chips (length: 10 mm, width: 10 mm, thickness: 3 mm) were immersed in each solution. The temperature of each solution was set to be 80°C, and the chips were immersed for 3 minutes. Then, the amount of hydrogen generated by the reaction between the silicon chips and each solution was measured by water substitution for 5 minutes. Each component in Table 1 is shown in terms of a mass ratio. The generated amount of hydrogen represents the amount per unit weight of the silicon chips. A larger generated amount of hydrogen represents higher chemical action.

[Table 1]

| | Solution | | | | | Generated amount of hydrogen [mL/g] |
|---|---|---|---|---|---|---|
| | Commercially available coolant | | Triethanolamine | Sodium hydroxide | Water | |
| | Rikamultinole | Lunacoolant | | | | |
| No.1 | 1 0 | 0 | 0 | 0.04 | 1 | 14 |
| No.2 | 0 | 1 | 0 | 0.04 | 1 | 16 |
| No.3 | 0 | 0 | 1 | 0.04 | 1 | 42 |
| No.4 | 0 | 0 | 0 | 0.04 | 1 | 26 |
| No.5 | 0 | 0 | 1 | 0 | 1 | 22 |
| No.6 | 0 | 0 | 5 | 0.04 | 1 | 5 |

Table continued

| | Solution | | | | | Generated amount of hydrogen [mL/g] |
|------|----------|----------|-----------------|------------------|-------|------|
| | Commercially available coolant | | Triethanolamine | Sodium hydroxide | Water | |
| | Rikamultinole | Lunacoolant | | | | |
| No.7 | 0 | 0 | 5 | 0.24 | 1 | 25 |
| No.8 | 0 | 0 | 1 | 0.08 | 1 | 40 |

The initial viscosity of the slurry for cutting a silicon ingot according to the present invention is not particularly limited, but is preferably 50 to 120 mPa·s at 90°C and a shear velocity of 57.6[s$^{-1}$], measured by using a rotation viscometer (e.g., Programmable rheometer DV-III, produced by Brookfield). When the initial viscosity of the slurry for cutting a silicon ingot is too low, the slurry applied to a wire may easily drip. When the initial viscosity of the slurry for cutting a silicon ingot is too high, the supply amount of the slurry to a cut portion of a silicon ingot becomes insufficient. Furthermore, the viscosity of the slurry during cutting processing is not particularly limited, but is preferably 160 mPa·s or less, more preferably 120 mPa·s or less at 90°C and a shear velocity of 57.6[s$^{-1}$], measured by using a rotation viscometer (e.g., Programmable rheometer DV-III, produced by Brookfield). When the viscosity of the slurry during cutting processing is too high, uniform dispersion of the slurry at a cut portion of a silicon ingot is prevented, with the result that the cutting speed may decrease, and a wire may break.

In the present invention, water, a known coolant, and a mixture thereof can be used as the liquid component of the slurry. The water used herein preferably contains a small content of impurity but is not limited thereto. Specific examples of water include pure water, ultra pure water, city water, and industrial water. The content of the water is not particularly limited, but is preferably 10% by mass to 40% by mass with respect to the total mass of the slurry for cutting a silicon ingot.

Furthermore, a coolant generally used as a cutting assistant mixed solution containing polyethylene glycol, benzotriazole, oleic acid, and the like may be used. Such a coolant is commercially available, and specific examples thereof include Rikamultinole (trade name, produced by Rikashokai Co. , Ltd.) and Lunacoolant (trade name, produced by Otomo Kagaku Sangyo KK). The content of the coolant is not particularly limited, but is preferably 10% by mass to 40% by mass with respect to the total mass of the slurry for cutting a silicon ingot.

The slurry for cutting a silicon ingot according to the present invention has a strong basicity owing to the basic material. Therefore, the cutting interface of a silicon ingot weakens due to the reaction as represented by the following formula (1), and lapped with abrasive grains.

$$Si + 4H_2O \rightarrow Si(OH)_4 + 2H_2 \qquad (1)$$

As is apparent from the above formula, as pH of the slurry is higher (has a stronger basicity), the reaction of silicon is further promoted. Therefore, the slurry for cutting a silicon ingot according to the present invention has pH of 12 or more, preferably 13 or more. Very low pH of the slurry is not preferable because the reaction (weakening) speed of the silicon is low, which makes it impossible to increase the cutting speed.

Furthermore, the slurry for cutting a silicon ingot of the present invention is used at 65°C to 95°C. In the case where the temperature at which the slurry is used is lower than 65°C, the reaction is not activated, so that the cutting resistance is not reduced sufficiently. The temperature exceeding 95°C is not preferable because water required for the reaction becomes insufficient due to the evaporation of the liquid component (mainly water) in the slurry, with result that the cutting resistance increases.

However, even in the case where the temperature at which the slurry for cutting a silicon ingot of the present invention is lower than 65°C (e.g., about 25°C), it is possible to proceed cutting while removing the processing stress (residual distortion) occurring due to the cutting to obtain a wafer with low distortion (effect as described in JP-A 2000-343525).

In order to confirm the above-mentioned effect, an experiment of cutting a polycrystalline silicon ingot (each side: 150 mm, length: 25 mm) with a multi-wire saw was performed using a slurry A for cutting a silicon ingot of the present invention and a conventional slurry B for cutting a silicon ingot.

<Slurry A>

Triethanolamine: water: sodium hydroxide: abrasive grains = 1 : 1 : 0.078 : 1.2 (mass ratio)

<u>Slurry B</u>

Rikamultinole (produced by Rikashokai Co., Ltd.) : abrasive grains = 2.078 : 1.2 (mass ratio)

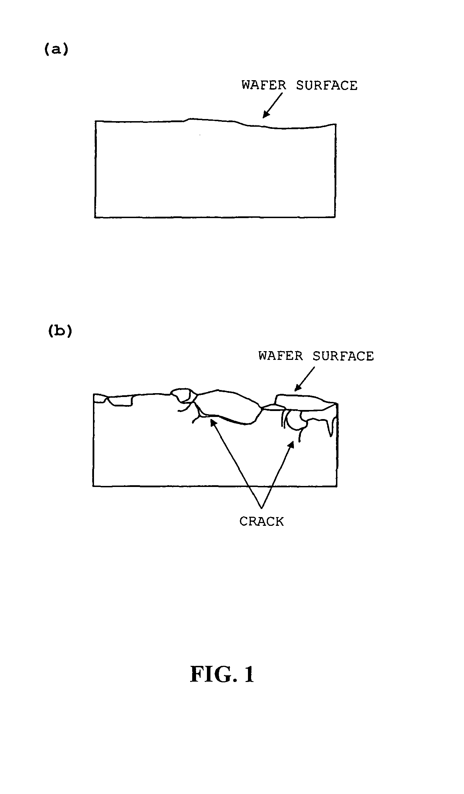

Fig. 1 shows the results obtained by observing the cross-section of a cut wafer with a SEM (scanning electron microscope). Figs. 1(a) and 1(b) are each a view obtained by tracing an outline of a surface layer portion of the cross-section of a cut wafer using each of the slurries A and B for cutting a silicon ingot.

As is apparent from Fig. 1, with the slurry A for cutting a silicon ingot of the present invention, the surface of the wafer was smooth, and no cracks were found in the cross-section. In contrast, with the conventional slurry B for cutting a silicon ingot, the surface of the wafer was rough, and cracks reaching the depth of about 3 to 7 $\mu$m were found. Furthermore, the deformation amount of a wire during processing was measured with an eddy-current displacement sensor, and the following was found. In the case of using the slurry A for cutting a silicon ingot of the present invention, the deformation amount was smaller by 6% on average (that is, the cutting resistance was smaller by 6% on average), compared with the case of using the slurry B for cutting a silicon ingot.

In accordance with the purpose of maintaining the quality of a product and stabilizing performance, the kind of a silicon ingot, processing conditions, and the like, various kinds of known additives may be added to the slurry for cutting a silicon ingot according to the present invention. Examples of the additives include a humectant, a lubricant, anticorrosives, a chelator such as sodium ethylenediaminetetraacetate, and an abrasive grain dispersion assistant such as bentonite.

The slurry for cutting a silicon ingot of the present invention can be prepared by mixing the above-mentioned respective components in a desired ratio. The method of mixing the respective components is arbitrary, and for example, the components can be mixed by stirring with a blade-type stirrer. The order of mixing the respective components is also arbitrary. Furthermore, for the purpose of purification or the like, the prepared slurry for cutting a silicon ingot may be subjected to further treatment (e.g., filtering and ion exchange treatment).

According to the method of cutting a silicon ingot of the present invention, a cutting apparatus is used. As the cutting apparatus used herein, an arbitrary one can be used. Examples of the cutting apparatus include a band saw, a wire saw, a multi-band saw, a multi-wire saw, an outer edge cutting apparatus, and an inner edge cutting apparatus. Of those, when a large ingot of 6 inches or more is cut, a wire saw and a multi-wire saw are particularly preferable. The reason for this is as follows. An ingot can be cut with a smaller cutting allowance and a more uniform thickness, compared with that obtained using other cutting apparatuses, and a number of wafers can be cut at a time.

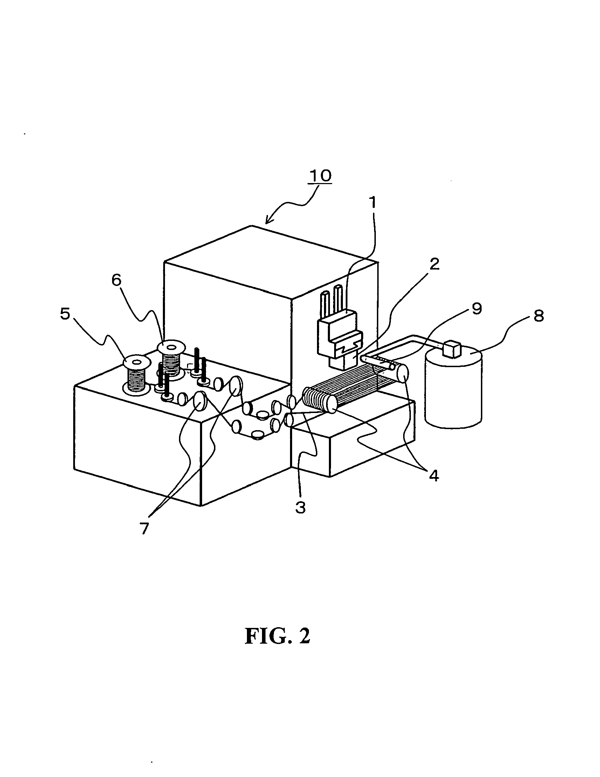

Herein, the method of cutting a silicon ingot according to the present invention will be described, exemplifying the case of using a multi-wire saw as a cutting apparatus. As shown in Fig. 2, a multi-wire saw 10 includes: an ingot feeding mechanism 1 for fixing and pressing down a silicon ingot 2; a wire feeding mechanism for feeding a bare wire 3; a slurry stirring/supply tank 8 for supplying a slurry for cutting a silicon ingot; a slurry coating head 9 for coating the bare wire 3 with the slurry for cutting a silicon ingot; a wire delivery mechanism 5 for delivering the bare wire 3; a wire winding mechanism 6 for winding the bare wire 3; and a tension control roller 7 for keeping the tension of the bare wire 3 constant. The wire feeding mechanism includes two rotation rollers 4 that rotate in synchronization, and grooves for guiding the wire 3 are formed on a outer circumference of each rotation roller 4. The bare wire used herein may be made of metal or resin, and a metal wire is more preferable in terms of the cutting efficiency.

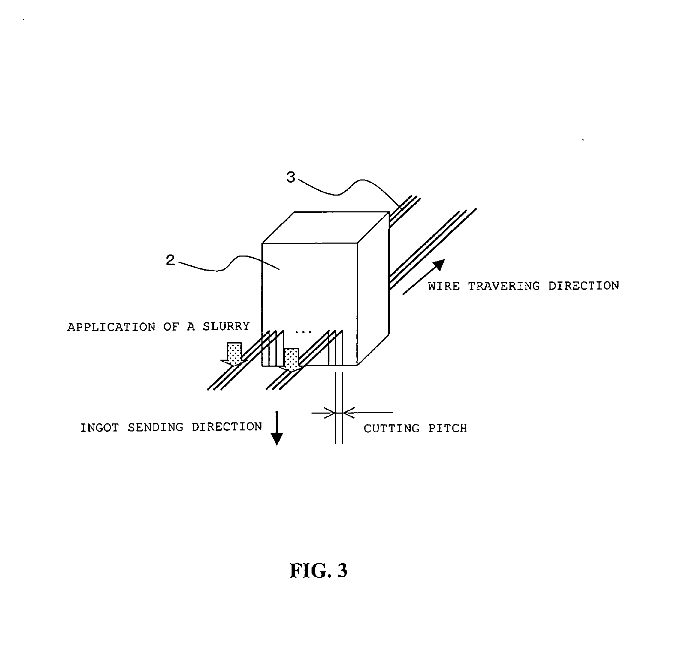

In cutting a silicon ingot with such a multi-wire saw, the silicon ingot 2 fixed to the ingot feeding mechanism 1 is brought into contact with the bare wire 3. The bare wire 3 is delivered from the wire delivery mechanism 5 that is synchronized with the wire feeding mechanism, and is wound the wire winding mechanism 6. Furthermore, the slurry for cutting a silicon ingot supplied from the slurry stirring/supply tank 8 is applied to the wire 3 via the slurry coating head 9. Then, as shown in Fig. 3, when the slurry for cutting a silicon ingot is transported to a silicon ingot cutting portion by the traveling bare wire 3, the silicon ingot 2 is shaved to be cut by a lapping function.

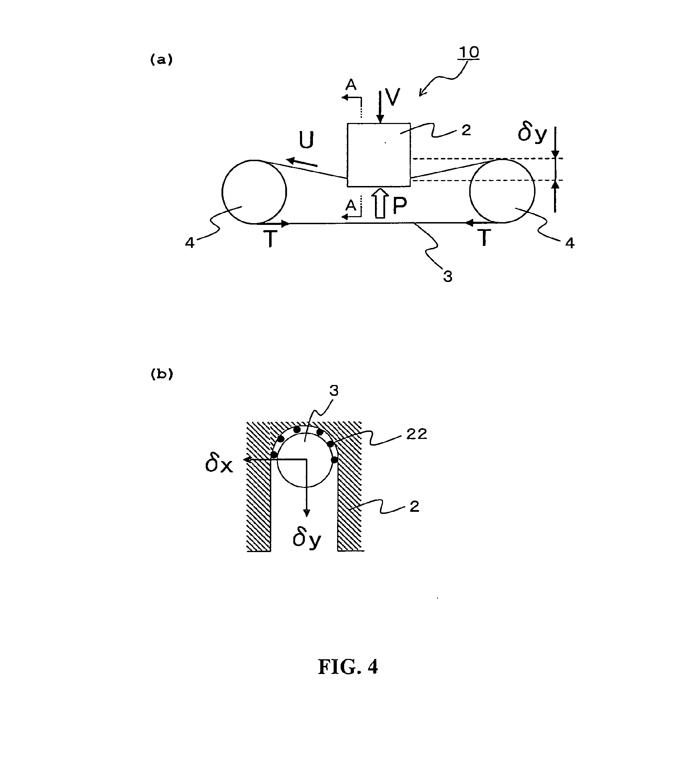

Next, an evaluation method in cutting of the silicon ingot 2 using the multi-wire saw 10 will be described with reference to Fig. 4. Fig. 4 shows a relationship of each parameter in cutting of the silicon ingot 2 using the multi-wire saw 10. Fig. 4(a) is a schematic view showing a method of cutting the silicon ingot 2, and Fig. 4(b) is a cross-sectional view taken along the line A-A of Fig. 4(a). In Fig. 4, assuming that the feeding speed of the silicon ingot 2 is V, the feeding speed of the wire 3 is U, the cutting resistance is P, the displacement of the wire 3 in a direction perpendicular to the cutting direction is $\delta_x$, the displacement of the wire 3 in the cutting direction is $\delta_y$, and the tension of the wire 3 is T, the following experimental formulas are generally known.

$$P \propto V/U \qquad (3)$$

$$\delta_x \propto P/T \qquad (4)$$

$$\delta_y \propto P/T \qquad (5)$$

Based on those formulas, in cutting of the silicon ingot 2 using the multi-wire saw 10, the displacement $\delta_x$ of the wire 3 in a direction perpendicular to the cutting direction, and the displacement $\delta_y$ (deformation) of the wire 3 in the cutting direction are measured, whereby the cutting speed and the cutting resistance can be evaluated.

This will be described in detail. First, a slurry containing abrasive grains 22 is introduced to a cutting interface of the silicon ingot 2 by the wire 3. Then, owing to the maldistribution of the abrasive grains 22 in the slurry and the uneven wear and twist of the wire 3, the displacement $\delta_x$ of the wire 3 in a direction perpendicular to the cutting direction and the displacement $\delta_y$ of the wire 3 in the cutting direction are caused. $\delta_x$ represents the displacement of the wire 3 in a direction perpendicular to the cutting direction. Therefore, when this value increases, warping, irregular thickness, and minute unevenness (saw marks) of the wafer obtained by cutting the silicon ingot 2 occur, which degrades the quality of the wafer. Thus, smaller $\delta_x$ is better. Furthermore, when $\delta_y$ increases, the delay in the cutting direction is caused in the wire 3 at the cutting interface, which makes it impossible to obtain a desired cutting speed. Therefore, smaller $\delta_y$ is better. Assuming that the tension T of the wire 3 is constant, the cutting resistance P may be reduced to decrease $\delta_x$ and $\delta_y$ in accordance with the formulas (4) and (5). As is understood from the formula (3), in order to reduce the cutting resistance P, the feeding speed V of the silicon ingot 2 may be decreased, or the feeding speed U of the wire 3 may be increased. However, the feeding speed V of the silicon ingot 2 is proportional to the cutting speed of the silicon ingot 2, so that the feeding speed V cannot be decreased excessively. When the feeding speed U of the wire 3 is increased, it becomes necessary to increase the length of the wire, which increases a wire cost. Therefore, U cannot be increased excessively. As described above, each parameter is closely related to each other, so that each parameter is set to maintain a balance in view of the cutting efficiency and quality of a wafer, whereby the cutting speed and the cutting resistance are evaluated.

Each parameter has been described exemplifying the case of using a multi-wire saw. The same applies to the case of using a wire saw.

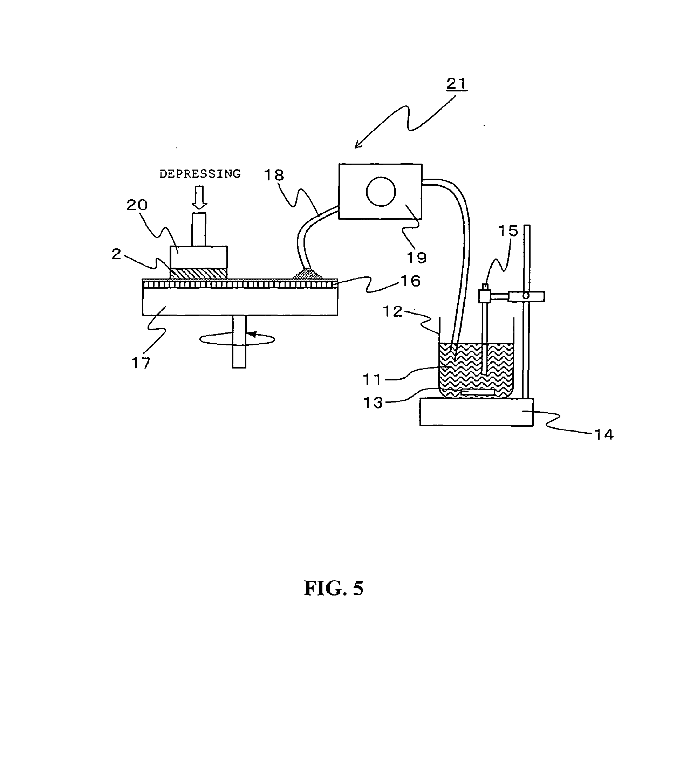

Furthermore, as another method of evaluating the cutting speed and the cutting resistance, there is a method using a polishing apparatus as shown in Fig. 5.

A polishing apparatus 21 includes: a beaker 12 for storing a slurry 11 for cutting a silicon ingot; a heater·stirring unit 14 for heating the slurry 11 and stirring it by a magnet rotator 13; a thermometer 15 for measuring the temperature of the slurry 11; a rotation table 17 with a polishing pad 16 attached thereto; a liquid-sending pump 19 for supplying the slurry 11 onto the polishing pad 16 via a liquid-sending tube 18; and a polishing head 20 for fixing and pressing the silicon ingot 2 against the polishing pad 16.

In the above-mentioned polishing apparatus 21, the silicon ingot 2 is polished as follows. While the slurry 11 for cutting a silicon ingot is stirred with the heater·stirring unit 14, the slurry 11 is heated. The rotation table 17 is rotated at a predetermined rotation number, and the slurry 11 for cutting a silicon ingot is applied onto the polishing pad 16 with the liquid-sending pump 19, and the silicon ingot 2 fixed to the tip of the polishing head 20 is pressed against the polishing pad 16 at a predetermined pressure. Then, the polishing speed can be obtained from the change in mass of the silicon ingot 2 after a predetermined period of time. Furthermore, by observing the minute unevenness on the surface of the silicon ingot after being polished, the magnitude of the polishing resistance (corresponding to the cutting resistance in the case of using a wire saw) can be acquired. As a result of a preliminary experiment, it was found that there is a correlation of Ew/Ep = 3/5 between a polishing speed Ep measured by the method shown in Fig. 5 and a cutting speed Ew in the multi-wire saw 10 (see Fig. 2).

Thus, the cutting speed and the cutting resistance in the case of using a wire saw can be evaluated by evaluating the polishing speed and the polished surface of the silicon ingot.

Examples

Hereinafter, the present invention will be described in more detail by way of examples. However, the present invention is not limited thereto.

[Example 1]

8 parts by mass of sodium hydroxide were dissolved in 100 parts by mass of water to obtain a basic aqueous solution. This aqueous solution, 100 parts by mass of triethanolamine, and 100 parts by mass of polyethylene glycol were mixed. To this mixed solution, 100 parts by mass of SiC abrasive grains (GC#1000, average particle diameter: about 10 $\mu$m, produced by Fujimi Inc.) were added, followed by stirring, whereby a slurry for cutting a silicon ingot was prepared. At this time, the mass ratio of triethanolamine with respect to water in a liquid component of the slurry was 100 ÷ 100 = 1.0. Furthermore, the pH of the obtained slurry at 25°C was 13.3, and the initial viscosity thereof at 90°C and a shear velocity of 57.6 [s$^{-1}$] was 50 mPa·s.

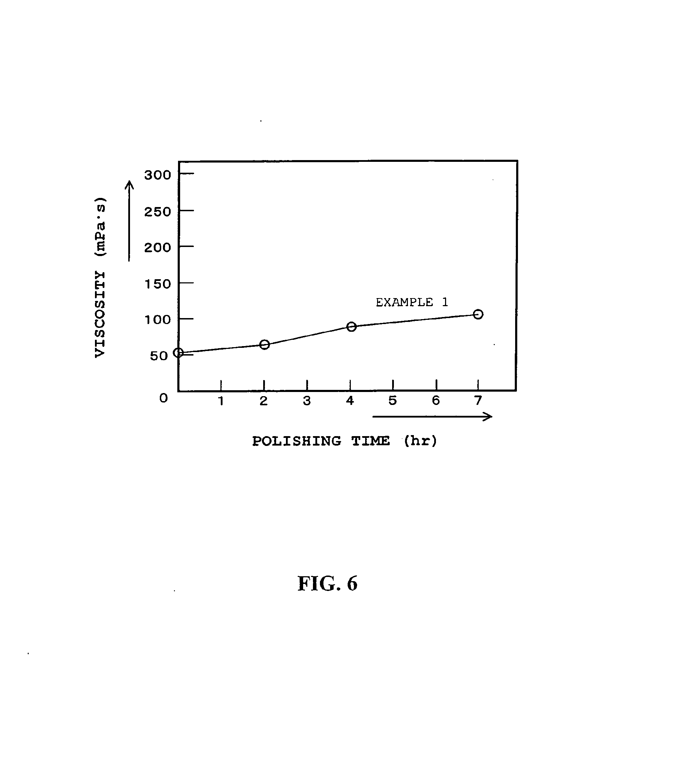

A polycrystalline silicon ingot sample (3 mm × 3 mm × thickness: 1 mm) was polished under the following polishing conditions using the obtained slurry for cutting a silicon ingot. The slurry was collected every predetermined time (0, 2, 4, and 7 hours), and the viscosity thereof at a shear velocity of 57.6 [s$^{-1}$] was measured using a rotation viscometer (Programmable rheometer DV-III, produced by Brookfield). Fig. 6 and Table 2 show the results.

<u>\<Polishing conditions\></u>

| | |
|---|---|
| Polishing pad : | diameter 200 mm (produced by Buhler, polishing buffer, ultra-pad for 8-inch wafer) |
| Sample position : | 65 mm from the center of the pad |
| Rotation number of polishing table : | 200 rpm |
| Slurry supply amount : | 65 cc/minute |
| Slurry supply position : | 65 mm from the center of the pad, backward rotation by 30° of the sample |
| Slurry temperature | : 90°C |
| Sample pressure | : 10 N |

[Comparative Example 1]

8 parts by mass of sodium hydroxide were dissolved in 100 parts by mass of water to obtain a basic aqueous solution. This aqueous solution, 100 parts by mass of polyethylene glycol, and 7.5 parts by mass of polyvinyl alcohol gel (obtainedbymixingpolyvinyl alcohol with a polymerization degree of 1,500 with water in a mass ratio of 1:9, followed by gelling) as a conventional thickener were mixed. To this mixed solution, 100 parts by mass of SiC abrasive grains (GC#1000, average particle diameter: about 10 $\mu$m, produced by Fujimi Inc.) were added, followed by stirring, whereby a slurry for cutting a silicon ingot was prepared. The pH of the obtained slurry at 25°C was 13.8, and the initial viscosity thereof at 90°C and a shear velocity of 57.6[s$^{-1}$] was 30 mPa·s.

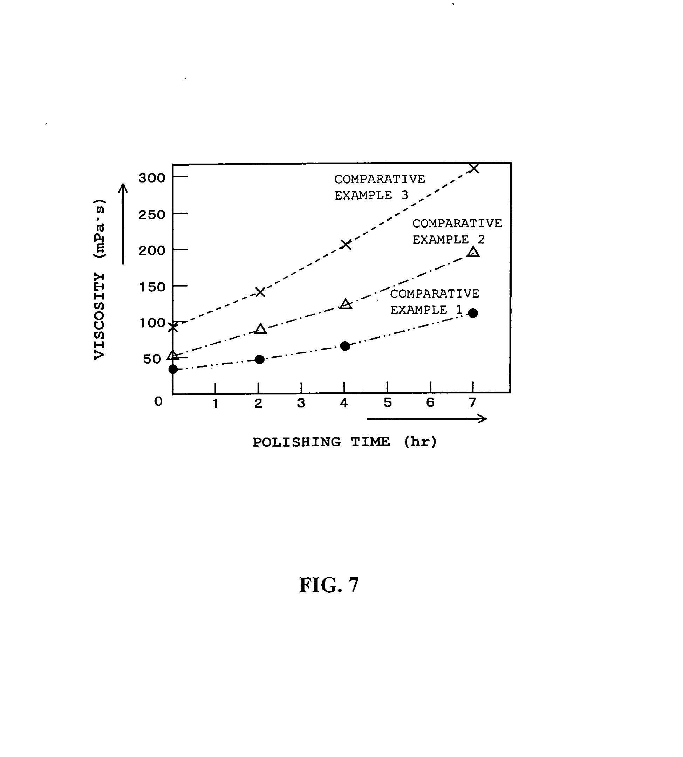

The viscosity of the slurry was measured in the same manner as in Example 1, using the obtained slurry for cutting a silicon ingot. Fig. 7 and Table 2 show the results.

[Comparative Example 2]

A slurry for cutting a silicon ingot was prepared in the same manner as in Comparative Example 1, except that 10.0 parts by mass of polyvinyl alcohol gel (obtained by mixing polyvinyl alcohol having a polymerization degree of 1,500 with water in a mass ratio of 1: 9, followed by gelling). The pH of the obtained slurry at 25°C was 13.8, and the initial viscosity thereof at 90°C and a shear velocity of 57.6[s$^{-1}$] was 50 mPa·s.

The viscosity of the slurry was measured in the same manner as in Example 1, using the obtained slurry for cutting a silicon ingot. Fig. 7 and Table 2 show the results.

[Comparative Example 3]

A slurry for cutting a silicon ingot was prepared in the same manner as in Comparative Example 1, except that 15.0 parts by mass of polyvinyl alcohol gel (obtained by mixing polyvinyl alcohol having a polymerization degree of 1, 500 with water in a mass ratio of 1: 9, followed by gelling). The pH of the obtained slurry at 25°C was 13.8, and the initial viscosity thereof at 90°C and a shear velocity of 57.6[s$^{-1}$] was 90 mPa·s.

The viscosity of the slurry was measured in the same manner as in Example 1, using the obtained slurry for cutting a silicon ingot. Fig. 7 and Table 2 show the results.

[Table 2]

| | Slurry collecting time | | | |
|---|---|---|---|---|
| | 0 hours | 2 hours | 4 hours | 7 hours |
| Example 1 | 50 mPa·s | 60 mPa·s | 90 mPa·s | 105 mPa·s |
| Comparative Example 1 | 30 mPa·s | 50 mPa·s | 65 mPa·s | 105 mPa·s |
| Comparative Example 2 | 50 mPa·s | 90 mPa·s | 120 mPa·s | 190 mPa·s |
| Comparative Example 3 | 90 mPa·s | 140 mPa·s | 205 mPa·s | 305 mPa·s |

As is apparent from Fig. 6 and Table 2, with the slurry for cutting a silicon ingot according to the present invention, even after a polishing processing time had passed, the viscosity of the slurry did not increase greatly. Thus, according to the method of cutting a silicon ingot with a wire saw using this slurry, the change in viscosity of the slurry is suppressed, whereby the cutting performance can be maintained constant for a long period of time.

In contrast, with slurries (Comparative Examples 1 to 3) each having the viscosity adjusted by using polyvinyl alcohol which is a conventional thickener, when polishing processing was performed for a long period of time, the viscosity of the slurry increased owing to the evaporation of water, and the rate of change of the viscosity increased with the passage of time. Thus, the change in viscosity of the slurry was not reduced (see Fig. 7).

[Example 2]

A polycrystalline silicon ingot sample (3 mm × 3 mm × thickness: 1 mm) was polished under the following polishing conditions, using the same slurry for cutting a silicon ingot as that in Example 1. A polished amount was obtained from the change in mass of the sample before and after polishing, and the polished amount was divided by a polishing time to obtain a polishing speed. Table 3 shows the results.

<Polishing conditions>

| | |
|---|---|
| Polishing pad | : diameter 200 mm (produced by Buhler, polishing buffer, ultra-pad for 8-inch wafer) |
| Sample position | : 65 mm from the center of the pad |
| Rotation number of polishing table: | 200 rpm |
| Polishing time | : 5 minutes |
| Slurry supply amount | : 65 cc/minute |
| Slurry supply position | : 65 mm from the center of the pad, backward rotation by 30° of the sample |
| Slurry temperature | : 80°C |
| Sample pressure | : 10 N |

Next, the obtained wafer was washed with water, followed by drying. The polished surface of the ingot was observed with a microscope, and evaluated based on the following standard. Table 3 shows the results.

<Evaluation standard>

o: Little unevenness on the polished surface of ingot
Δ: Much unevenness on the polished surface of ingot
×: Extensive unevenness on the polished surface of ingot

[Comparative Example 4]

To 258 parts by mass of coolant (Lunacoolant #691, produced by Otomo Kagaku Sangyo KK), 100 parts by mass of SiC abrasive grains (GC#1000, average particle diameter of about 10 μm, produced by Fujimi Inc.) were added, followed stirring, whereby a slurry for cutting a silicon ingot was prepared. The pH of the obtained slurry at 25°C was 6.7.

A polycrystalline silicon ingot sample was polished in the same manner as in Example 2, except that the obtained slurry was used at 25°C. Table 3 shows the results.

[Comparative Example 5]

97 parts by mass of water, 3. 0 parts by mass of triethanolamine, and 100 parts by mass of coolant (Lunacoolant #691, produced by Otomo Kagaku Sangyo KK) were mixed. To this mixed solution, 100 parts by mass of SiC abrasive grains (GC#1000, average particle diameter of about 10 μm, produced by Fuj imi Inc.) were added, followed by stirring, whereby a slurry for cutting a silicon ingot was prepared. At this time, the mass ratio of triethanolamine with respect to water in a liquid component of the slurry was 3.0 ÷ 100 = 0.03. Furthermore, the pH of the obtained slurry at 25°C was 10.5.

A polycrystalline silicon ingot sample was polished in the same manner as in Example 2 using the obtained slurry. Table 3 shows the results.

[Table 3]

| | Slurry temperature | Evaluation | |
|---|---|---|---|
| | | Polishing speed [μm/minute] | Polished surface of ingot |
| Example 2 | 80 | 25 | ○ |
| Comparative Example 4 | 25 | 17 | △ |
| Comparative Example 5 | 80 | 18 | × |

As is apparent from Table 3, the polishing speed of the slurry for cutting a silicon ingot according to the present invention was about 1.5 times higher than that of the conventional slurry containing abrasive grains (Comparative Example 4), and had less unevenness on the polished surface. Thus, according to the method of cutting a silicon ingot with a wire saw using the slurry, the production efficiency of a wafer can be enhanced, and the cutting resistance can be decreased. Therefore, the quality of a wafer can be enhanced. Furthermore, the feeding speed of an ingot can be increased by a decreased amount of the cutting resistance, so that the cutting speed can be increased further.

In contrast, with the slurry having a different content of triethanolamine (Comparative Example 5), the polishing speed was low, and there was extensive unevenness on the polished surface.

[Example 3]

A slurry for cutting a silicon ingot containing 4.9% by mass of sodium hydroxide with respect to the total mass of a liquid component of a slurry, triethanolamine in a mass ratio of 0.5 with respect to water in the liquid component of the slurry, and 33% by mass of abrasive grains with respect to the total mass of the slurry was prepared, and the difference in cutting resistance caused by the difference in slurry temperature was investigated. The pH of the obtained slurry at 25°C was 13.8.

A polycrystalline silicon ingot (each side: 150 mm, length: 25 mm) was cut with a multi-wire saw in Fig. 2 under the following cutting conditions using the obtained slurry for cutting a silicon ingot and the deformation amount of the wire during processing was measured with an eddy-current displacement sensor.

<Cutting conditions>

Wire diameter         : 100 μm (Type SRH, produced by JFE Steel)
Wire pitch            : 0.39 mm
Wire feeding speed    : 600 m/minute
Silicon ingot feeding speed    : 0.35 mm/minute
Slurry temperature    : 25°C, 80°C

As a result of the experiment, the wire deformation amount by cutting at a slurry temperature of 80°C was smaller by 17% on average, compared with the wire deformation amount by cutting at a slurry temperature of 25°C. That is, the cutting resistance was found to decrease by 17% on average.

**Claims**

1.  A slurry for cutting a silicon ingot, comprising abrasive grains and a basic material, **characterized in that**:

    a content of the basic material is at least 3.5% by mass based on a total mass of a liquid component of the slurry;
    the slurry contains organic amine in a mass ratio of 0.5 to 5.0 with respect to water in the liquid component of the slurry; and
    pH of the slurry is 12 or more.

2.  A method of cutting a silicon ingot using a slurry for cutting a silicon ingot, comprising abrasive grains and a basic material, **characterized in that**:

    a content of the basic material is at least 3.5% by mass based on a total mass of a liquid component of the slurry;
    the slurry contains organic amine in a mass ratio of 0.5 to 5.0 with respect to water in the liquid component of the slurry;
    pH of the slurry is 12 or more; and
    the slurry is used at 65°C to 95°C.

**Amended claims under Art. 19.1 PCT**

1.  (Amended) A slurry for cutting a silicon ingot, comprising abrasive grains and a basic material, **characterized in that**:

    the basic material is alkaline metal hydroxide, alkaline earth hydroxide or mixtures thereof;
    a content of the basic material is at least 3. 5% by mass based on a total mass of a liquid component of the slurry;
    the slurry contains organic amine in a mass ratio of 0.5 to 5.0 with respect to water in the liquid component of the slurry; and
    pH of the slurry is 12 or more.

2.  (Amended) A method of cutting a silicon ingot using a slurry for cutting a silicon ingot, comprising abrasive grains and a basic material, **characterized in that**:

    the basic material is alkaline metal hydroxide, alkaline earth hydroxide or mixtures thereof;
    a content of the basic material is at least 3.5% by mass based on a total mass of a liquid component of the slurry;
    the slurry contains organic amine in a mass ratio of 0.5 to 5.0 with respect to water in the liquid component of the slurry;
    pH of the slurry is 12 or more; and
    the slurry is used at 65°C to 95°C.

(a)

WAFER SURFACE

(b)

WAFER SURFACE

CRACK

# FIG. 1

**FIG. 2**

APPLICATION OF A SLURRY

WIRE TRAVERING DIRECTION

INGOT SENDING DIRECTION

CUTTING PITCH

**FIG. 3**

(a)

(b)

**FIG. 4**

DEPRESSING

**FIG. 5**

**FIG. 6**

**FIG. 7**

## INTERNATIONAL SEARCH REPORT

| | International application No. |
|---|---|
| | PCT/JP2004/015030 |

A. CLASSIFICATION OF SUBJECT MATTER
Int.Cl$^7$ C10M173/02, B24B57/02, B28D5/00, H01L21/304
//(C10M173/02, 133:04), C10N30:06, 40:22

According to International Patent Classification (IPC) or to both national classification and IPC

B. FIELDS SEARCHED

Minimum documentation searched (classification system followed by classification symbols)
Int.Cl$^7$ C10M173/00-173/02, 105/58-105/66, 133/04-133/14, 133/54,
C10N30:06, 40:20-40:24, B24B57/02, B28D5/00-5/04, H01L21/304

Documentation searched other than minimum documentation to the extent that such documents are included in the fields searched
Jitsuyo Shinan Koho          1922-1996    Toroku Jitsuyo Shinan Koho    1994-2005
Kokai Jitsuyo Shinan Koho    1971-2004    Jitsuyo Shinan Toroku Koho    1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 99/35220 A1 (NOF Corp. et al.), 15 July, 1999 (15.07.99), & AU 9917846 A          & EP 1004653 A1 & JP 11-349979 A         & KR 2000076116 A & US 6228816 B1 | 1-2 |
| X | JP 2003-82336 A (Asahi Denka Kogyo Kabushiki Kaisha), 19 March, 2003 (19.03.03), (Family: none) | 1-2 |
| X | JP 2002-114970 A (Asahi Denka Kogyo Kabushiki Kaisha), 16 April, 2002 (16.04.02), (Family: none) | 1-2 |

☒  Further documents are listed in the continuation of Box C.          ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 January, 2005 (07.01.05) | 25 January, 2005 (25.01.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/015030 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2003-124159 A (Asahi Denka Kogyo Kabushiki Kaisha), 25 April, 2003 (25.04.03), (Family: none) | 1-2 |

Form PCT/ISA/210 (continuation of second sheet) (January 2004)